# EUROPEAN PATENT APPLICATION

(11) **EP 1 429 261 A1**
(43) Date of publication of application: **16.06.2004**
(21) Application number: 03254364.7
(22) Date of filing: 09.07.2003
(51) Int. Cl.: G06F 17/30

(54) **Method and apparatus for displaying data in a web page**

(30) Priority: 26.11.2002 US 305777
(71) Applicant: Sonoco Development, Inc., Hartsville, South Carolina 29550 (US)
(72) Inventor: Robertson, Christopher W., Florence, South Carolina 295901 (US); Range, Richard, Florence, South Carolina 29501 (US)
(74) Representative: MacDougall, Donald Carmichael

(57) **Abstract**

The present invention provides a library file having a plurality of object-oriented functions for displaying data in tabular form via a web-browser. A separate display file is created that calls out desired functions from the library file in order to display a table having desired attributes. Importantly, the present invention allows multiple tables having different formatting and functionality to be displayed on the same web page. Further, the present invention allows a table to be defined having a body with independent formatting from that of at least one of a header and a footer of the table, such that when the table is displayed, the body is scrollable, while the header and footer remain fixed. The present invention also allows for defining borders and fonts, editing, and navigation within the table. Further, changes made to the table may be stored in a log for use in updating a remote database.

## Description

### BACKGROUND OF THE INVENTION

### 1. Field of Invention.

The present invention relates generally to apparatus and methods for creating customized tables having various format and edit capabilities.

### 2. Description of Related Art.

A common means for displaying data is in tabular form. Tables provide a convenient and informative way of displaying data and relaying information concerning the data. For example, data relating to a company's accounts receivable or accounts payable is oftentimes organized by customer or vendor for ease of reference. In this instance, a table may be created listing the various customers or vendors, as well as some summary information associated with the respective customer or vendor, such as the address of the customer or vendor, the total dollar amount in question, the dates of the invoices in question and the like. The resulting table generally has a number of rows and columns with each row associated with a respective customer or vendor and each column including a different type of data, such as name, address, dollar amount in question, dates of invoices in question, etc.

To aid in table generation, various software applications have been developed. Applications have been written that retrieve the data required to populate a table from various databases and then construct and display a table summarizing the relevant data in tabular form on a user's workstation. The table is generally constructed by a client server application such that the user can scroll upwardly or downwardly through the table in order to view different entries. In order to remind the user of the meaning of the data in the various columns, and/or to provide other information, the client-server application generally provides a header and/or a footer that remains fixed in position and is visible to the user as the user scrolls through the table. Additionally, conventional client-server applications permit a user to select an entry in the table, such as a particular row of the table corresponding to a respective customer or vendor.

Since the data depicted in the table is generally in summary form, a significant amount of data often exists in support of the summary data presented in the tabular form. As such, the display presented on the user's workstation may be broken into multiple windows, one of which displays the scrollable table described above. Other secondary windows may be constructed, however, to provide the supporting or additional data related to an entry in the table. As such, upon the selection of a particular entry in the table, the data, which supports or further details the selected entry may be displayed in one or more secondary windows. The user may thereafter select another entry in the table and the supporting data depicted in the secondary window would be changed to reflect the new selection.

This type of organized data presentation, both in summary and detailed form, has proven to be quite popular and is widely used. Unfortunately, client-server applications require the installation of client-side software on each workstation for display and editing of the data. For example, EXCEL®, Lotus®, Access®, etc. are all client-side software applications that are used to view and manipulate data in tabular form. The initial installation of the client-side software may be a time consuming process. Additionally, the client-side software on each workstation must be modified each time that the client-side software is revised, updated or the like. Again, this process of revising the client-side software may be a time consuming task.

For this reason, web-based systems have been developed. These systems embed the tabular data in Hypertext Markup Language (HTML) or similar files. HTML files can be interpreted by web-browser software resident on most workstations. By placing the tables in web-browser format HTML files, specialized client-side software is typically not required to display the data. As such, issues with regard to installing and maintaining specialized client-side software are reduced or eliminated.

Although new web-based systems eliminate problems associated with installation and maintenance of client-side software, there are still some drawbacks to currently offered systems. Specifically, the first generation of these web-based systems does not provide many of the user-friendly features for display and editing of data offered by the more conventional client-side software applications. Often, the data was merely placed in a static HTML file without many functions for displaying or editing the data. A major problem with these early web-based systems was rudimentary scroll functions. Specifically, often the header and footer for the data was not "frozen" such that they would appear at all times when the user scrolled up and down in the table. As the user scrolled down, the header would eventually disappear off the top of the screen, and the footer would not be visible until the bottom portion of the table was reached.

In light of these problems, newer applications were developed that allowed for display of tables using a web-browser, where the table contained scroll functions for "freezing" headers, footers, and columns. Two such systems are disclosed in U.S. Patent No. 6,205,454 to Dauerer et al. and U.S. Patent No. 6,232,967 to Kelley et al, both of which are incorporated herein by reference. The '454 Dauerer patent discloses a web-based system that "freezes" headers and footers during up and down scrolling, and the '967 Kelley patent discloses "freezing" of columns during left and right scrolling. These systems use HTML formatting for the data.

A major problem with these conventional systems, however, is that they do not use existing HTML commands to create the scrolling features. Instead, these systems use newly developed, non-standard programming "tags" to instruct the web-browser concerning "freezing" of headers, footers, and columns. As these tags are not in the syntax of instructions for many general web-browsers, these systems require that specialized web-browser software capable of deciphering the scroll tags be installed and maintained on each workstation, which in many ways, defeats the purpose of using web-based software over client-side software.

U.S. Patent No. 6,199,080 to Nielsen also discloses methods for "freezing" header, footers, and columns during scrolling and is also incorporated herein by reference. This system, however, requires that special information be added to the file with regard to the size of the table.

As mentioned, many of the conventional client-side programs, such as EXCEL®, LOTUS ®, ACCESS®, etc. also provided a wide variety of other features above and beyond scrolling capabilities. Specifically, these systems typically allow for sorting of data, highlighting of data, insertion and deletion of columns and rows, data editing and update, etc. To create a more user-friendly and efficient system, it would be advantageous to include these features in a system that uses web-browser software for the display of data, so as to mirror the functionalities currently available in client-side software.

Another problem with many prior art systems is added processing delay. Specifically, as discussed above, in many client-side applications, the data is collected and stored on a remote server and is accessed by the workstation via a network. This requires that the workstation have a constant connection to the network, which can raise security issues. Furthermore, when a user edits a record in the database, this updated record is sent to the server on the network for updating the data, and a new copy of the data is typically transmitted back to the workstation. This process can be time consuming resulting in slower performance.

### BRIEF SUMMARY OF THE INVENTION

The present invention remedies many of the problems mentioned above, as well as provides other advantages over the prior art. In particular, the present invention provides apparatus and methods that allow for access, display, editing, reconfiguring, and storage of tabular data using a web-based browser. Specifically, the apparatus of the present invention provides application software stored on a computer readable medium that includes object-oriented code for use in display and editing of tables. The object-oriented code can be used by a designer to create tables for display of data to a user. The object-oriented code provides several different features, which the designer may pick and choose from for creating data tables. In this regard, the designer creates a separate file, such as a HTML file, that calls out the various object-oriented code desired for display and editing of the table. By providing object-oriented code for table generation and functionality, a designer can more easily design custom web pages with greater ease than more traditional systems that require the designer to code all various functions in the HTML source file for the generated table.

One important aspect of the present invention relates to table generation. Specifically, the apparatus and methods of the present invention provide object-oriented programming for creation of scrollable tables. This embodiment of the present invention uses the <div> tag HTML command to divide a table into distinct sections, (e.g., header, body, and footer). By separating the body of the table from that of the header and the footer, the body can be scrolled up and down, while the header and footer remain "frozen," thereby allowing the user to view the various data entries of the table with reference to the header and footer. In a further embodiment, the present invention further synchronizes the header, body, and footer to maintain alignment during horizontal scrolling. As the <div> command is a standard HTML command, the present invention provides scrollable tables that can be displayed by many existing web-browsers. For example, the present invention provides scrollable tables that can be displayed by Microsoft IE 5.0 or above.

The use of the <div> tag also provides additional features beyond scrolling table features. Specifically, the <div> tag defines logical divisions in a web page and allows for formatting of alignment and style for each section of the page. This is useful in creating logical divisions of a table, such as a header, body, and footer, where each division can be formatted differently. In a similar manner, the <div> tag also allows for format and display of multiple tables having different formatting and functions on the same web page. In this embodiment, the <div> tag allows for compartmentalization on the web page, such that different tables can be defined in different areas on the web page. This, in turn, allows a user to view multiple tables having different formatting on the same web page.

The apparatus and methods of the present invention provide additional features for table design. Specifically, the present invention provides object-oriented program code that allow for linking of data from one table to additional viewable data. In this embodiment, certain portions of the data will include links to additional data. When a user clicks on or otherwise selects the data, additional tables may be displayed that allow the user to view various underlying data.

The apparatus and methods of the present invention also allow a designer to incorporate various features into a table that simulate features typically provided by client-side applications, such as EXCEL®, Lotus®, Access®, etc. For example, the apparatus and methods of the present invention allow a designer to customize the appearance of the table, such as borders, background and foreground, logos, colors, etc. The apparatus and methods of the present invention provide features that allow a user to highlight rows. The highlight bar can be customized in appearance and if desired, can cause other events to occur when the position of the highlight bar changes and can be moved either by using arrow keys or via mouse. Furthermore, the apparatus and methods of the present invention provide objected orient code that allows a user to move between rows, (next, previous, or by row number), in a table, delete and insert new rows, add and edit data, as well as sort numerical and string data in the tables.

As stated previously, in many conventional systems, a constant connection is maintained between the individual workstation and the remote server via the network and significant time delay is introduced with constant updates of the data located on the server during editing operations by the user. The apparatus and methods of the present invention, on the other hand, separate the functions of the logic layer of the application from the presentation layer of the application. Separation allows changes to be made in one layer without affecting any other layers. For example, in the present case, the apparatus and methods of the present invention implement all changes requested by the user in the presentation layer so that the user can view the changes. Further, the apparatus and method of the present invention may be used to create a log of all edits made by the user to the table. The log may then be used to update the database after the user has finished all updates to the table. As such, performance is increased in table viewing and editing. Further, because the workstation using the tables of the present invention does not require continuous connection to the remote database server, security risks are minimized.

In summary, a library file containing object-oriented code has been developed. The object-oriented code provides various features that can be incorporated into an HTML file for creating a table to display and allow edit of data using web-browser software. The features provided by the object-oriented code provide the same general functionality provided by many client-side software applications. Further, the apparatus and methods of the present invention use a track change method of logging edits made by a user to the table. This log may then be used to update the database.

Since the presentation layer of the present invention works in conjunction with a conventional web browser in order to present the data, the web-based application is not client-side software that must be installed and maintained on each workstation. Instead, the browser and the associated presentation layer may be maintained on or be otherwise accessible by the web server for use by any designated user. By utilizing the presentation layer of the present invention, however, the look and feel of the resulting display provided by the browser is akin to or mimics the display provided by a conventional client-server application and is much more user friendly and functional than the displays provided by conventional browser applications.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
Figure 1 is a block diagram illustrating a general communication network in which the apparatus and methods of the present invention may be implemented.
Figure 2 illustrates generation of two tables within the same web page, where each table has formatting and functions independent of the other table according to one embodiment of the present invention.
Figures 3A-3B illustrate a table generated by an apparatus and method according to one embodiment of the present invention wherein the table contains scrollable features that allow for constant viewing of the header and footer of the table while the body is scrolled.
Figures 4A-4E illustrate a table generated by an apparatus and method according to one embodiment of the present invention wherein the table contains soft keys that allow a user to navigate within the table.
Figure 5 illustrates a table generated by an apparatus and method according to one embodiment of the present invention wherein the figures illustrate various formatting options for formatting the font, borders, etc. of the table.
Figures 6A-6B illustrate a table generated by an apparatus and method according to one embodiment of the present invention wherein the figures illustrate a search function associated with the table.
Figures 7A-7B illustrate a table generated by an apparatus and method according to one embodiment of the present invention wherein the figures illustrate an export function associated with the table.
Figure 8 illustrates a table generated by an apparatus and method according to one embodiment of the present invention wherein the figure illustrates a resize to fit function associated with the table.
Figures 9A-9D illustrate a table generated by an apparatus and method according to one embodiment of the present invention wherein the figures illustrate sorting functions associated with the table.
Figures 10A-10C illustrate a table generated by an apparatus and method according to one embodiment of the present invention wherein the figures illustrate a row delete function associated with the table.
Figures 11A-11B illustrate a table generated by an apparatus and method according to one embodiment of the present invention wherein the figures illustrate a row insertion function associated with the table.
Figure 12 illustrates a table generated by an apparatus and method according to one embodiment of the present invention wherein the figure illustrates a clear all rows function associated with the table.
Figures 13A-13C illustrate a table generated by an apparatus and method according to one embodiment of the present invention wherein the figures illustrate functions for editing individual cells in the table.
Figures 14A-14C illustrate a table generated by an apparatus and method according to one embodiment of the present invention wherein the figures illustrate track change functions for logging edits made to the table.
Figure 15 illustrates tables generated by an apparatus and method according to one embodiment of the present invention wherein the figure illustrates linking of data from one table to data displayed in a separated table.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

As discussed above and mentioned in greater detail below, the present invention provides apparatus and methods for displaying data in tabular form in a web-browser based format. The apparatus and methods of the present invention provide a library file containing object-oriented code. Code in the library file provides various features that can be used to create a table or a plurality of tables for displaying data to a user in a web page. The library file includes object-oriented code that can be used to create a table having features for scrolling, highlighting, navigating, editing, inserting and deleting data, and sorting of data located in the tables. Each feature is provided in object-oriented format, thereby allowing a designer to pick and choose which functions will be available in the table.

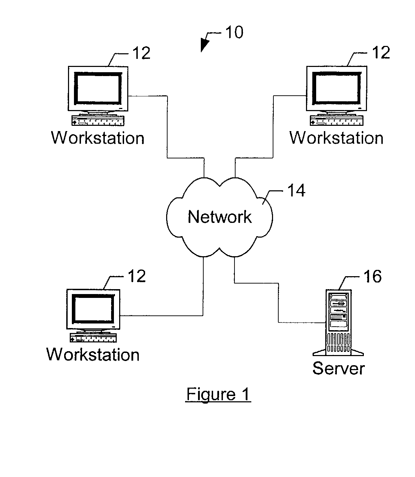

As a general matter, the apparatus and methods of the present invention are typically used in a network environment similar to that shown in Figure 1. Specifically, the network environment **10** may include a plurality of client computing systems or workstations **12** connected via a network **14** to one or more servers **16**. The network may be either an intranet or the Internet or some other type of computer or communications network. Data is typically stored in various files on the server. When requested, data is collected and placed in tabular form and provided via the network to a user at a workstation, where it can be displayed, edited, new data inserted, navigated, highlighted, exported, etc.

With regard to the present invention, a library file is provided that includes various object-oriented code for the display, navigation, and editing of tabular data. Using this library file, a designer creates a file that calls out the various object-oriented code from the library file to create a personalized tabular display for the user. The designed file includes not only call outs to the object-oriented programs located in the library file, but also includes data and links to data for populating the tables defined in the file. This file is then transmitted to the user's workstation **12**, where it can be displayed and edited in accordance with the parameters set by the file created by the designer.

It is noted here that while the apparatus and methods of the present invention are generally used in a network setting as illustrated in Figure 1, a networked system is not required. Specifically, the data could be located on a user's individual workstation, as opposed to an external or remote server. In this instance, the apparatus and methods of the present invention would still be used to create tables for displaying and editing of the data, as opposed to use of more conventional client-side applications such as EXCEL®, Lotus®, Access®, etc. By using the apparatus and methods of the present invention in this instance, frequent update and maintenance of client-side applications is not required, because the system will use a web-browser to display and edit data instead.

As discussed, the apparatus and method of the present invention provides a library of object-oriented code that can be used to construct a table having various desired characteristics. The library file includes code for controlling the format of tables, allowing scrolling of tables, while maintaining fixed headers and/or footer, event handlers for navigation within the tables, editing highlighting of the tables, table sorting, export of data, etc. Various aspects of the library file are discussed in greater detail below. Following a discussion of the library file are several examples of the use of the library file to create tables with desired properties.

### I. Description and Use of the Library File To Create Customized Tables

The library file includes various object-oriented code for use in generation of tables to display and edit data. By selecting the various function calls from the library file, a designer can create tables having desired properties and features. In general, the library file of the present invention provides tools that can be used by a designer to create customized tables for display and editing of data. One intent is to create a web page based table that provides many of the features typically available in more traditional client-side software applications, such as EXCEL®, Lotus®, Access®, etc. The library file is written in Java language programming and can be used with files written in HTML and Java, as well as other programming languages such as ACMAscript, Dbscript, etc.

### A. Basic Format of a Web Page File According to One Aspect of the Invention

Using the library file of the present invention, a web page designer can create a customized web page having either one or various tables displayed therein, where each of the tables may have different formatting and functionality. The web page typically includes four major sections, but may have more. An example format of a web page according to one embodiment of the present invention is provided below. Specifically, the web page includes a first section, (Section I Table Constructor), in which the web page designer defines the various attributes, formatting, and functionality desired for each table appearing in the web page. Following, the table constructor section, the web page may include an event handler section. This section includes call functions to the library file for the various functionalities that the user wishes to include in the tables. (Note that the handlers defined in this section of the table can be disabled for specific tables under Section I.). Further, the web page includes a section, (Section III), for defining the tables in the web page. This section places the tables at desired locations in the web page, provides data for the header(s), body, and footer(s) of the table, etc. Finally, the web page includes an initialize section. This section sets up the final functionality once the table has been rendered and exists in the browser, such as application of all of the event handlers called in Section II.
Web Page File
Section I: Table Constructor
   Table 1
      Formatting
      Event Handler Disables
   Table 2
      Formatting
      Event Handler Disables
   Table N
      Formatting
      Event Handler Disables
Section II: Event Handlers
   Function Calls to Handlers
   onclick
   upkey
   downkey
   etc.
Section III: Define Tables
   Table 1
   Table 2
   Table N
Section IV: Initialize Tables
   Initialize Table 1
   Initialize Table 2
   Initialize Table N

The various aspects for creating a web page using the library file are discussed below. These aspects are referenced to the structure of the web page file outlined above.

### B. Table Formatting

In creating a web page according to the present invention, the user initially defines in a constructor section, (Section I), containing style and functionality attributes for each of the tables to be displayed. This section defines the various sections of the table, such as whether the table has a header(s) and footer(s). It also applies styles to the table and allows the designer to customize various color, border, size, etc. formats for each of the tables. In one embodiment of the present invention, the apparatus and methods of the present invention use Cascading Style Sheets (CSS) to provide the formatting for the various tables created. The default styles are stored as code in the library file. In the constructor section, the various formatting attributes provided by CSS can be altered for each table depending on the desired look and feel.

The default style code is called in the constructor section, (Section I), of the web page file. The code includes format information for displaying the table, sizing the table within the web page, and styles for use in printing the table. The code also includes style formats for the sorting direction arrow, which is displayed when the user sorts the data in the table.

As mentioned, Section II includes calls to the library file of the present invention for different event handlers that can be used in conjunction with the tables. As a default, all event handlers listed in Section II can typically be used with all tables displayed in the web page. Some of the event handlers require initial setup in the construction section, (Section I). If the web page designer does not wish for a particular web page to include one or more of the event handlers, these are typically disabled in the table constructor section, (Section I), for the particular table using the disable command. For example, if the designer does not wish for a particular table to recognize up/down key commands from the user, the up and down key event handler is disabled in the constructor section for the table. In instances where only one table is being displayed in a web page or where all tables in the web page have the same functionality, instead of disabling event handlers under each table in the constructor section, (Section I), the event handler is instead not called at all in the event handler section, (Section II).

Provided below in simplified form is the constructor section of a web page having different tables defined therein, along with a brief statement indicating the differences between the tables.

Table I uses standard (default) CSS formatting and has a header, body, and footer. Lines 1 and 2 of the code define the different portions of the table, and the last line applies the CSS styles to the table. Lines 3 and 4 set up the row change handler used when the user changes the highlighted row in the table. Lines 5 and 6 disable up/down keyboard functions for Table I.

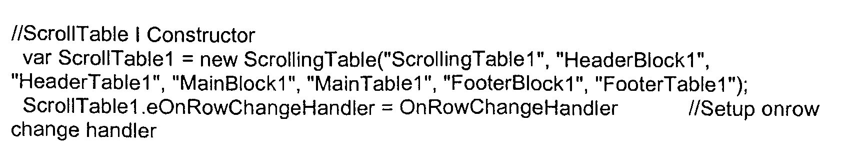

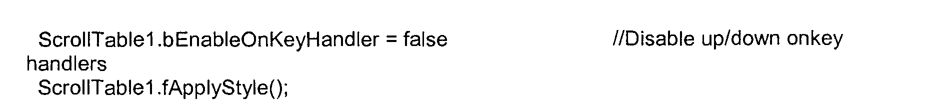

Table II includes a background logo, (such as the company's trademark), a functional call for a context menu that can be displayed via a right mouse click with purple font for the context menu. Lines 2 and 3 define the sections of the table, line 4 adds the background logo, line 5 defines the font color for the context menu, lines 6-9 define the items to appear in the context menu, and line 10 applies the styles.

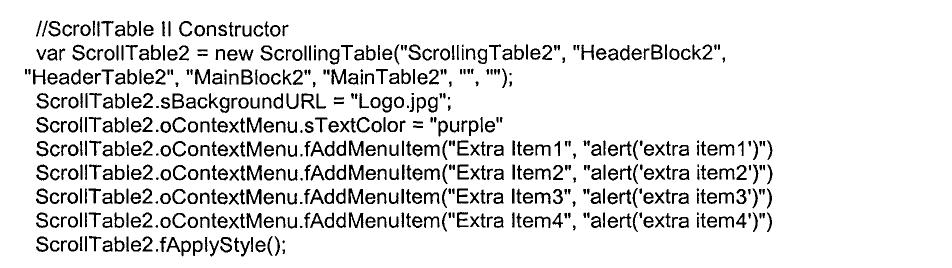

Table III includes various custom formatting of the table and cell border, as well as background and foreground coloring.

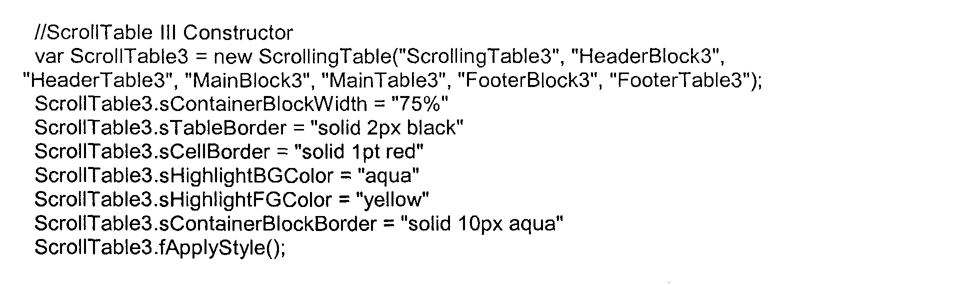

### C. Web Page Layout (Table Display & Scrolling Table Functions)

One advantageous aspect of the present invention is the ability to display multiple tables on a web page, where each of the tables can have individual formatting and functionality different from that of the other tables displayed in the web page. Further, the present invention allows for partitioning of a table into individual sections, (e.g., header, body, and footer), and providing different formatting and functionality for these different sections. Section I of the web page defines the different formatting and functionality for each table to be displayed. Section III of the web page defines the location of each table in the web page and divides the web page into logical sections such that the proper formatting and functionality for each table as defined in Section I is applied to the table as displayed.

To partition a web page into different sections for different tables having different formats and functionality and to partition a table into individual sections, (e.g., header, body, footer), having different formatting and functionality, the apparatus and methods of the present invention use the <div> tag. The <div> tag is an existing HTML tag that defines logical divisions in a web page. The <div> tag essentially informs the web-browser that everything following the <div> tag command has specified formatting and functionality different from that of the rest of the web page. The apparatus and methods of the present invention use the <div> tag command to separate various portions of a web page into different sections so that tables appearing in each section can be individually formatted and provided with different user functionality. The apparatus and methods of the present invention also use the <div> tag to allow a designer to create individual formatting for different sections, (e.g., header, body, footer), of a table. Specifically, the designer can create a table for display on a web page, where the table has various differently formatted sections, such as header, body, and footer. Using the <div> tag in table design, the designer can "freeze" the header and/or footer of the table relative to the body of the table so that the body of the table is scrollable in a vertical direction, while the header(s) and/or footer(s) remain fixed.

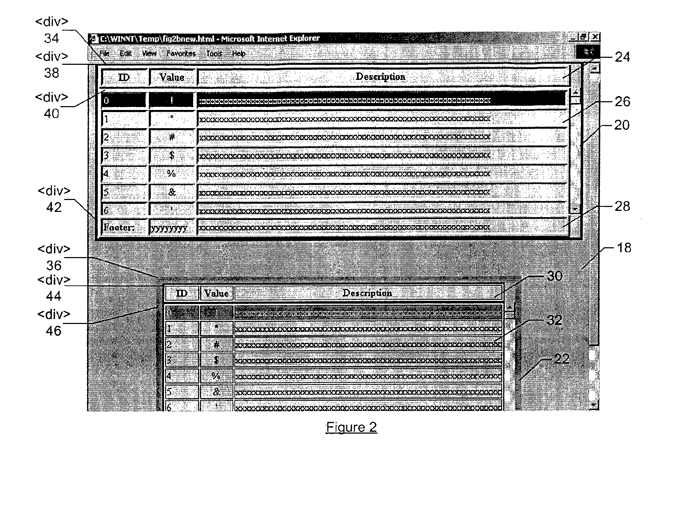

Some of the advantages of the <div> tag are more clearly illustrated with reference to Figure 2. Figure 2 illustrates a web page **18** having at least two tables, **20** and **22,** displayed therein. The first table **20** includes three sections, namely a header **24,** body **26,** and footer **28**, while the second table **22** includes only a header **30** and a body **32**. The two tables, **20** and **22,** also include other differences in terms of formatting functionality. For example, the two tables have different border formatting.

As illustrated in Figure 2, the web page is sectioned into two different tables using the <div> tag. The <div> tags, **34** and **36,** are used at the beginning and end of each of the tables. These <div> tags inform the web-browser that a logical division is being made in the web page. Associated with each <div> tag is the instructions for displaying the table and calls for formatting and functionality for the table to be used within the section of the web page defined by the <div> tag. For example, the section defined by the <div> tag **34** includes instructions associated therewith for displaying the table **20,** which has different formatting and functionality than that of table **22.**

Each table may further include <div> tags for sectioning the different portions of the table for different formatting and functionality. Specifically, table **20** includes three <div> tags, **38-42**, for respectively dividing the header, body, and footer of table into different sections, and table **22** includes two <div> tags, **44** and **46**, for sectioning the header and body of the table.

Provided below is an example of the code that would be included in Section III of the web page file to define two separate tables in the same web page, similar to that shown in Figure 2. Section III defines the placement on the web page of the tables and the formatting and functionality of the tables and headers, body, and footers in the table. This code illustrates use of the <div> tag.

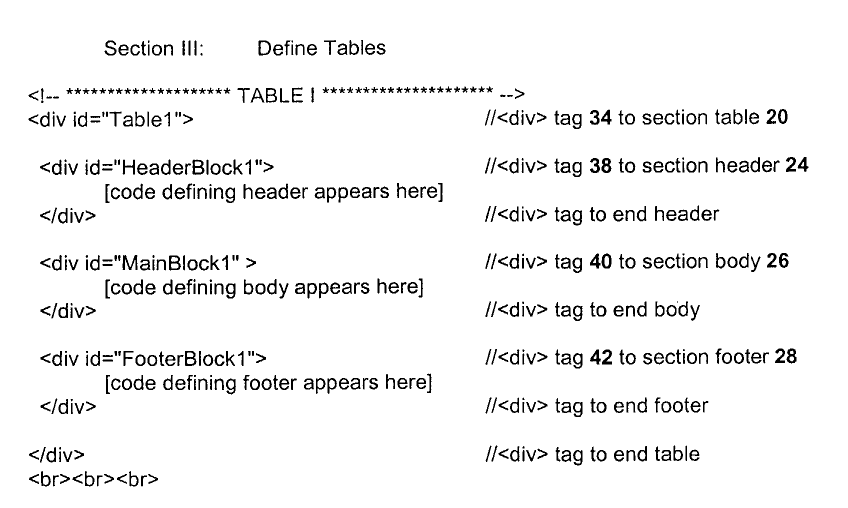

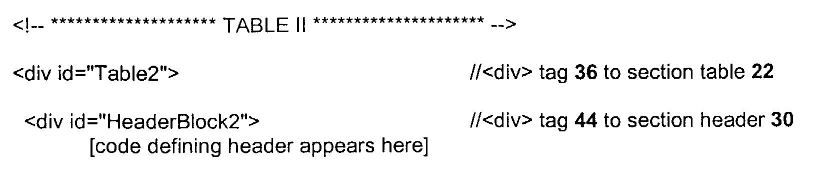

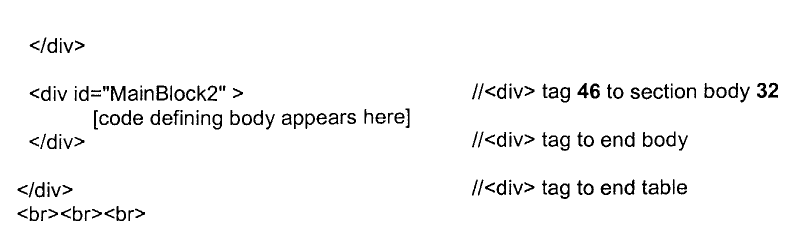

As can be seen, because the <div> tag logically separates the different areas of the web page, various tables having different formatting and functionality can be displayed on the same web page. The functionality of the <div> tag can also be used to separate the header, body, and footer of the tables for formatting. As mentioned, one advantage of this is the ability to create scrollable tables, where the header and/or footer remain "frozen," while the body is scrolled.

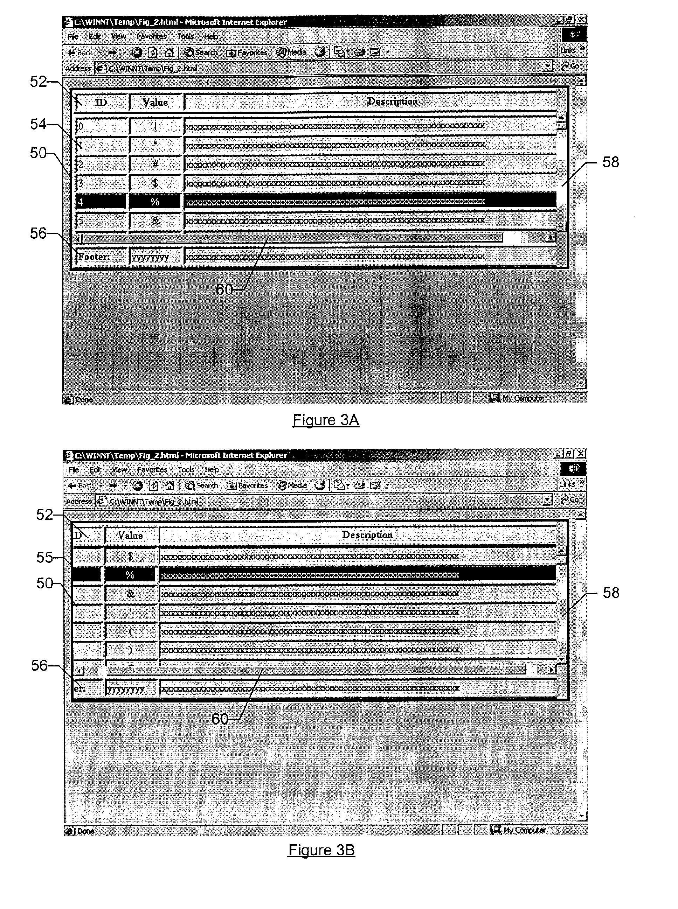

Figures 3A and 3B illustrate more fully the scroll functions of the present invention. Specifically, Figures 3A-3B illustrate a table constructed from the various object-oriented code from the library file of the present invention. As can be seen, the displayed table **50** includes a header **52**, body **54,** and footer **56.** The body **54** further includes a vertical **58** and horizontal scroll bar **60.** As illustrated in Figure 3B, when the body is scrolled vertically, the header and footer remain "frozen." However, when the body is scrolled horizontally, the header, body, and footer are synchronized with one another to thereby provide a table having scroll features that allow the user to view the header and footer at all times.

### D. Table Functionality

In addition to providing apparatus and methods for displaying tables having different formats in the same web page and tables having scrolling functions, the apparatus and methods of the present invention also provide various functionalities used to navigate within the tables, edit the tables, export data from the tables, etc. These different functions allow the apparatus and methods of the present invention to operate more like traditional client-side applications. The different functions are separated into different modules in the library file and can be included by the web designer as functions for individual tables in the web page. In other words, the designer can pick and choose which functions to include. Many of these functions are added to the file that creates the table in the event handler section, (i.e., Section II).

### 1. Scroll Functions

The library file of the present invention includes various event handlers for controlling display of the table during strolling. One notable event handler controls alignment of the header and footer with the body of the table during horizontal scrolling. The scroll handler keeps the header, body, and footer in synchronization. It essentially returns the amount that the body has scrolled to the handler, so that the header and footer can be adjusted by the same amount. This handler is illustrated in Figures 3A and 3B, where the table has been scrolled to the left and the header and footer are scrolled by the same amount.

Associated with table scrolling is also an event handler used for wrapping of the rows during scrolling. Specifically, the apparatus and methods of the present invention include an event handler for use when the user is located at the first or last row of the table. The event handler allows the user to jump to either the top or bottom row. Specifically, if the user is located at the last row of the table, the wrap event handler will jump to the first row if the user continues to select a down arrow and vice versa, if the user is on the top row and continues to select an up arrow.

### 2. Table Navigation

The library file of the present invention provides object-oriented code for navigation within the table. Two types of navigation are generally allowed. The first form of navigation is by use of the mouse to click on individual rows in the table or by use of up and down arrow keystrokes on the keyboard. This mimics most client-side application navigation schemes.

The mouse click handler returns a value indicating the row selected by the user when navigating within a table. Associated with the up and down key event handlers is a pointer to the current row selected by the user. This pointer is incremented or decremented based on keyboard commands received from the user.

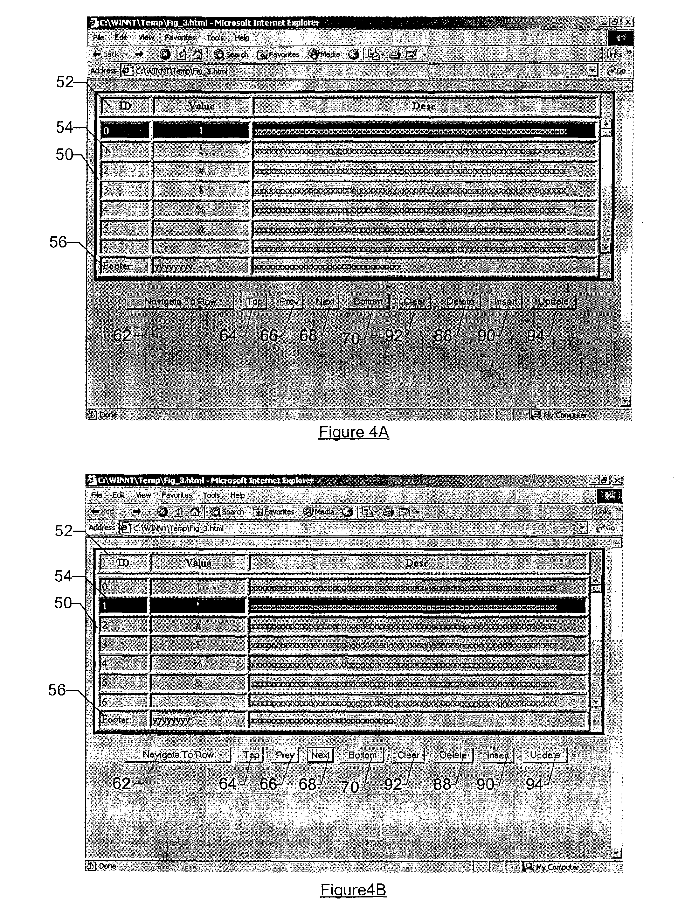

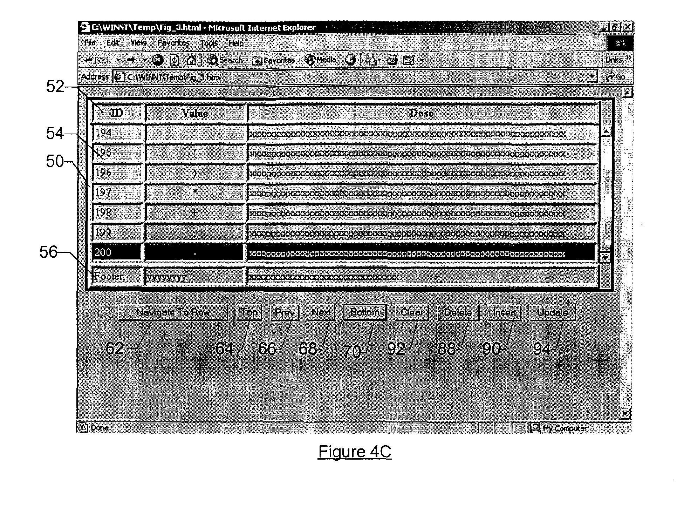

A second form of navigation uses soft keys that are depressed by the user via a mouse to navigate in the table. These soft keys operate similar to event handlers that navigate based on direct mouse and keyboards commands, but provide a visual navigation tool for the user. Figures 4A-4F depict use of these soft keys for navigation. Specifically, the displayed table includes soft keys entitled: Navigate to Row **62,** Top **64**, Previous **66,** Next **68**, and Bottom **70**. By depressing these soft keys, a user can navigate through the table. Further, if activated, the table may include both the soft key navigation tools, as well as the more traditional up and down keyboard functions and mouse clicks For example, with reference to Figure 4B, if the user depresses the Next **68** soft key, the table will display and highlight the next row in the table. Likewise, as illustrated in Figure 4A, if the user selects Previous **66** soft key, the table will then highlight the previous row. Figure 4C illustrates use of the Bottom **70** soft key to navigate to the last row of the table. From this position, if the user selects the Top **64** soft key, the table will again highlight and display the first row as shown in Figure 4A.

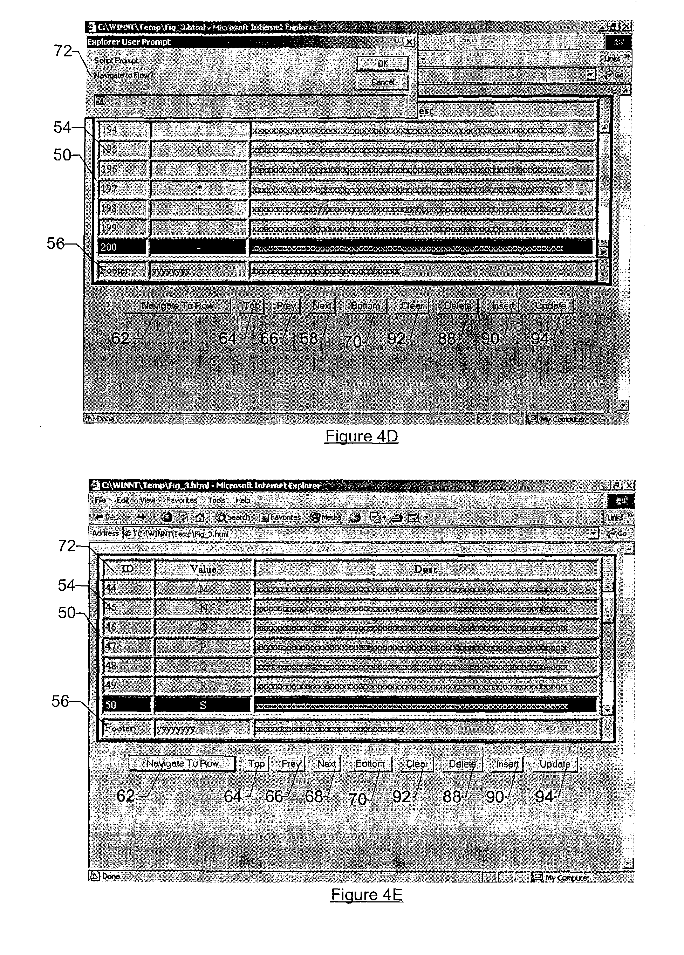

In addition to these directional navigation tools, the library file also includes object-oriented programming that allows the user to navigate to a selected row using the Navigate to Row **62** soft key. With reference to Figure 4D, when the Navigate to Row **62** soft key is selected, a prompt menu **72** appears. The prompt menu **72** requests that the user input the desired row. As illustrated in Figure 4E, the user has selected row 80, and the apparatus and methods of the present invention have altered the display so that row 80 now appears on the screen.

### 3. Table Formatting

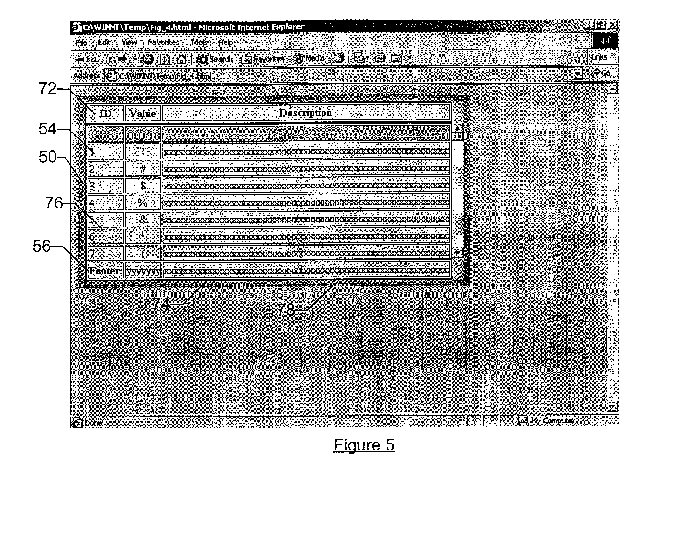

It has been previously mentioned, that the library file of the present invention further includes object-oriented code for customizing the visual aspects of the displayed border and text. Specifically, object code is included in the library file that defines various default values for table formats. This object code is in the constructor section, (i.e., Section I), of the file. The default formats can be customized by altering the values in the constructor section. The thickness, shading, etc. of the border of the table can be altered. The font size, color, style, etc. of the data and headings can also be altered. Figure 5 illustrates some of these features. As can be seen the border of the table is different from that of the table of Figure 2. Although not noticeable from the figure, the border of the cells are red in color and the highlighted row, (row 1), is highlighted with a yellow font.

To aid in understanding the use of the library table provided below are relevant portions of the source file used to create the table of Figure 5.
Specifically, the construct for the table is:

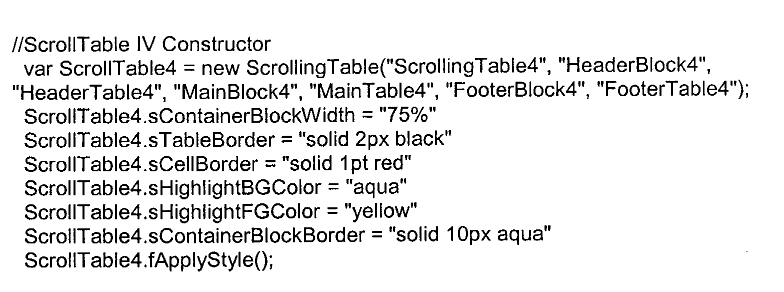

As can be seen from viewing this code in light of Figure 5, the table border **74** is a two pixel wide black line, and the cell border **76** is a one pixel wide red line. In Figure 5, the first row is highlighted. The background color for the fourth row is aqua, and the foreground is yellow. Finally, a ten pixel wide aqua border **78** surrounds the table.

### 4. Search Functions

The library file of the present invention further includes object-oriented code that provides search functions allowing a user to search for keywords in the table. The search function allows for searches of specified text in specified columns. The search is commenced by the user via a context menu. The context menu is defined by object-oriented code in the library file, which can be added by an event call for a table. The pop-up screen is similar to those of many client-side applications. It requires code for receiving a user's input and changing that input to code for use by the search function. Specifically, if the user requests a search for a term, such as "cost," the context menu code will transform the text search request into code that can be read by the search function to search for the term in the table. Further, the context pop-up menu may include several selectable functions, such as selecting a particular column to search, search for exact phrases, phrases starting at the beginning of text, or phrases contained within text. The selections made by the user are also transformed into code to be used by the search function. In other words, if the user selects to search for exact phrases, this selection is transformed to code that is supplied to the search function to indicate that the exact phrase it to be searched.

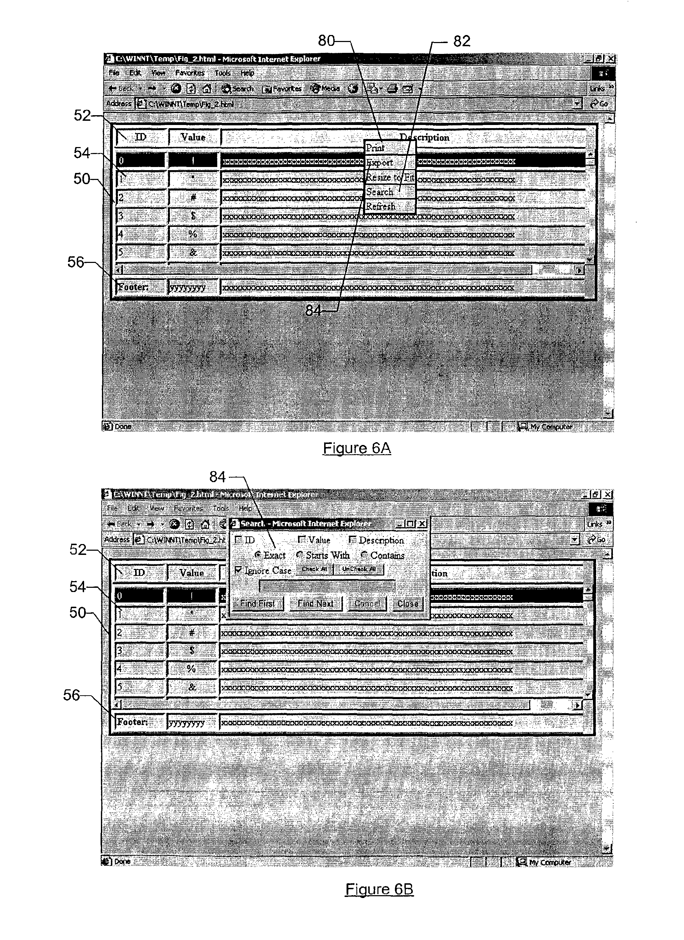

Figures 6A-6B illustrate use of the search function and the context menu. Specifically, as illustrated in Figure 6A, performing a right mouse click on the table displays an option menu **80.** One of the available options is search **82.** As illustrated in Figure 6B, selecting search **82** opens a search window **84.** The search window allows for a wide variety of options. The user may select a particular column to search, search for exact phrases, phrases starting at the beginning of text, or phrases contained within text. The user may also select whether the search should be case sensitive.

### 5. Data Export

The apparatus and methods of the present invention further allow for export of data from the tables for use in other programs. In this embodiment of the present invention, data displayed in the tables is converted into a delimited text file, where the data is typically comma delimited. This file can then be imported into another software program such as EXCEL®, Lotus®, Access®, etc.

The export function uses a pop-up context menu similar to that used by the search function. This menu allows the user to determine which delimiting notation that the user wishes to use to separate data in the file. The export function accesses the table and reads each row of data. The data is exported to a file, where the rows are separated by carriage returns, and data appearing in different columns in each row is separated by commas or whatever other delimeter was selected by the user from the context menu.

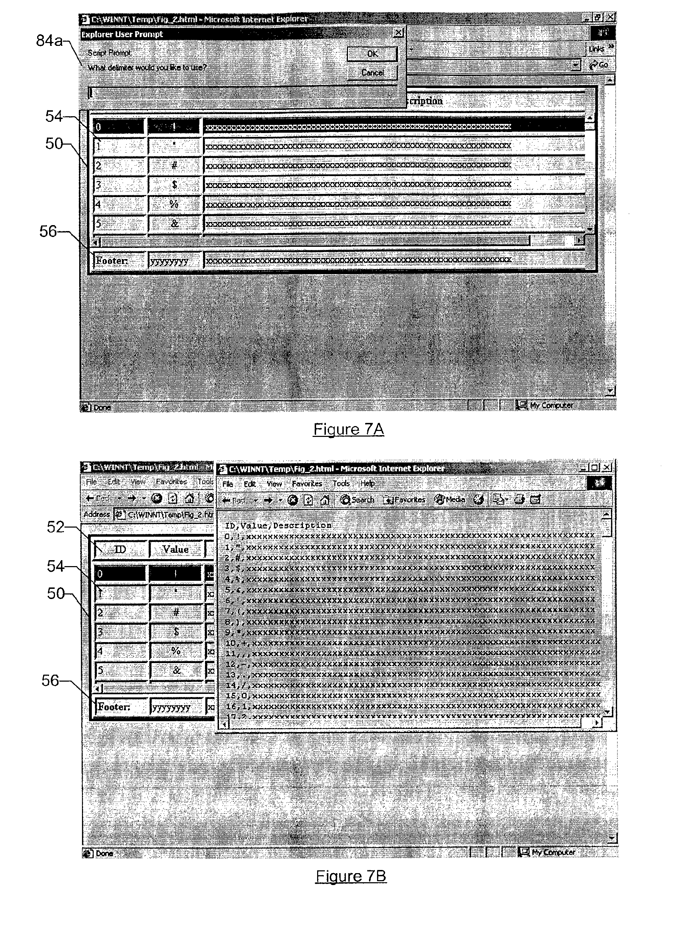

The data export function is illustrated with reference to Figures 6A, 7A, and 7B. As illustrated in Figure 6A, performing a right click on a table displays an option menu **80**. One of the available options is Export **84**. As illustrated in Figure 7A, when Export is selected, the apparatus and methods of the present invention display a prompt **84a** requesting the user to select a delimiter for use in creating the export file. As shown in Figure 7B, the apparatus and methods of the present invention create a data file that contains the data delimited by a comma or similar indicator.

### 6. Print, Resize, and Refresh

With reference to Figure 6A, the apparatus and methods of the present invention also allow a user, via the option menu, to print, resize to fit, and refresh the table. With regard to the print function, the library file of the present invention includes code that defines the style values for a table for purposes of printing. This code alters the border, fonts, etc. of a table in preparation for printing. The code may also adjust the size of the table for printing and adjust for overflow.

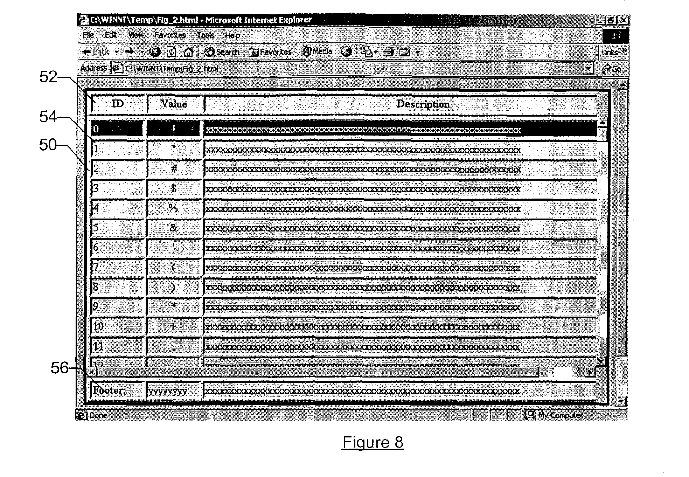

The resize to fit function includes code in the library file that resizes the height of the table to fit the display window. This function determines the current dimensions of the display window and adjusts the table accordingly. The refresh function resets the display of the table to its original display settings. For example, Figure 8 illustrates the table of Figure 6A after selection of the resize to fit function. As can be seen, the table is enlarged to fit the display area. If the refresh function is subsequently selected, the table will return to its original display format.

### 7. Data Sorting

An important tool for display and analysis of data is the ability to sort both string and numeric data. The library file of the present invention includes code for sorting both string and numeric data in ascending or descending order. Specifically, the system sorts the table based on the data of a selected column. The sorting is performed by creating an array and loading it with the data from the selected column for sorting. A subarray is also created that holds the row number and cell data. The sort function also determines whether the column includes numerical data, string data, or both numerical and string data. The data is then sorted either in ascending or descending order as requested by the user. During sorting, the original row number associated with the data is maintained. After sorting of the column of data, the rows associated with the column data are then rearranged in the table to represent the sorted form.

As a visual aid to the user, the library file includes object-oriented code for displaying arrows to the user indicating in which direction, (descending or ascending), the data is currently sorted. The library file includes codes for displaying a down arrow and separate code for displaying an up array. Based on whether the user chooses ascending or descending, the appropriate code is called to display the arrow.

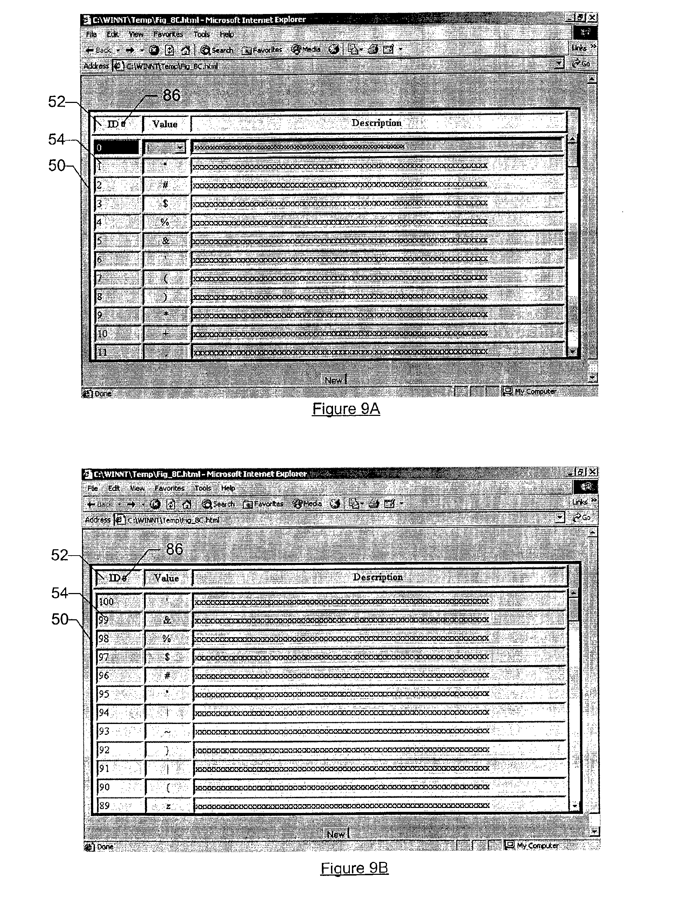

The data sorting features of the present invention are illustrated in Figures 9A-9B. Figure 9A illustrates a table displaying typical data. As noted the column labeled value includes numerical data. Figure 9A illustrates the data sorted in descending order as designated by the down arrow 86, while Figure 9B illustrates the data in ascending order.

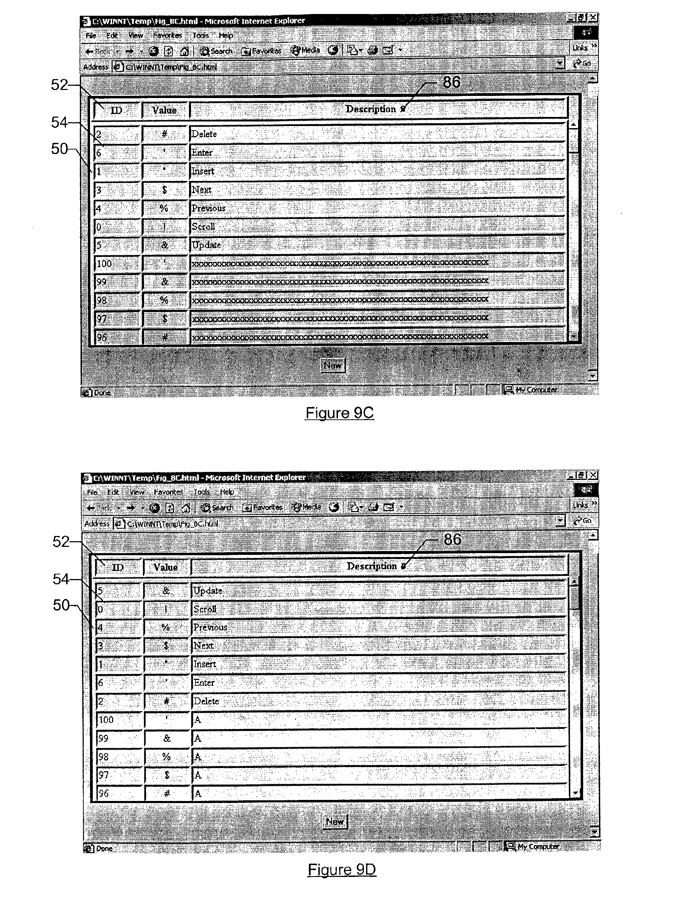

Figures 9C and 9D represent sorting of the table using string values. Specifically, Figure 9C illustrates sorting of the table by the description information in alphabetical descending order, while Figure 9D illustrates sorting in ascending order.

### 8. Data Editing and Table Configuration

In addition to displaying data to a user and allowing the user to sort and export the data, the apparatus and methods of the present invention also provide additional features that allow a user to edit the data, highlight rows of interest, delete or insert rows in the tables, etc. Importantly, the apparatus and method of the present invention include various editing tools in the library file. The designer of the table can select which options that the user will be allowed to use in editing and updating the table and data. For example, the library file of the present invention includes code that allows a user to delete a row. This code is activated either by the user selecting from a pop-up menu a row number to be deleted or by clicking on the desired row to be deleted. The delete function stores the number of the row and then deletes the row from the table. The delete function also includes code for highlighting the next row after the current row has been deleted. The delete function also includes code that allows a user to delete all rows of the table. In this instance, the number of rows in the table is previously determined and stored. The delete function, using this stored value, deletes all rows from the table.

To insert a row, the user either selects a row in the column below which a new row is desired or the user may select that a new row be added from a pop-up menu. Based on these commands, the insert function inserts a new row into the table having the same cell configurations as the existing rows.

The library function also allows a user to manually update any row either manually or by importing delimited data. The manual insertion method receives user input and updates the selected row. When data is imported, the insert data function, places the data in each cell of the row based on the delimiter breaks between the data.

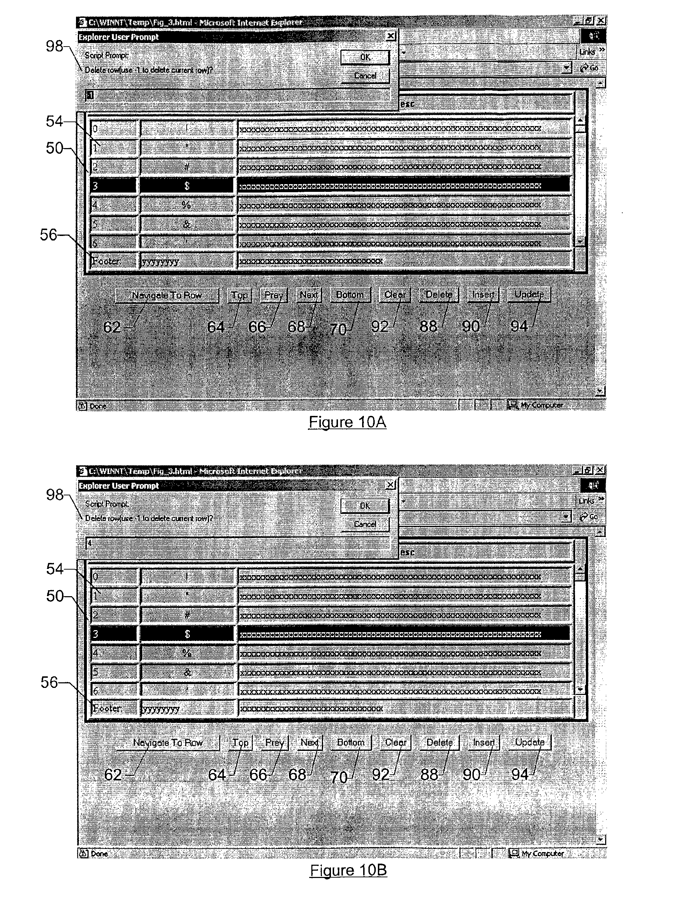

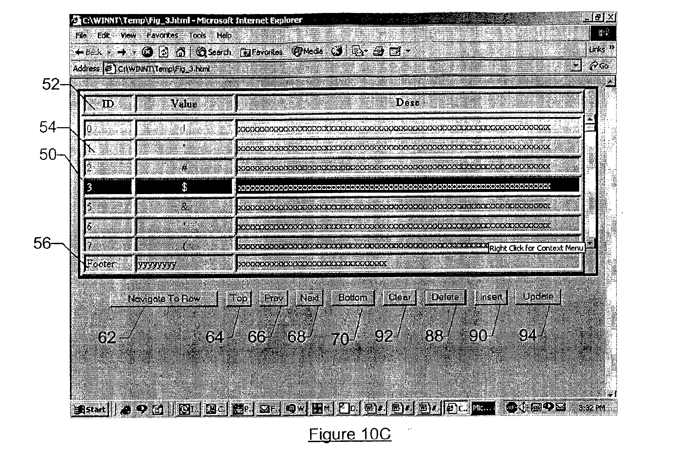

The operations of these functions are illustrated by Figures 10A-12B. Figure 10A illustrates a data table displayed to the user. Located under the table is a set of soft keys: Delete **88**, Insert **90**, Clear **92**, and Update **94**. By clicking on these soft keys, a user can delete or insert rows of data, as well as delete all rows. Alternatively, the user can use keyboard commands and pull down menus instead of the soft keys to perform these various functions. In Figure 9A, the user has chosen to delete row **4**, (signified as ID 4). The user has selected the delete soft key, which causes the display of a prompt requesting that the user enter the number of the row to be deleted. As illustrated, the user has currently selected row **4** as indicated by the highlight **96.** The prompt **98** includes a value of "-1" in the prompt. If the user merely hits return the highlighted row will be deleted. Alternatively, however, as shown in Figure 10B, if the user does not currently have the fourth row highlighted, the user can input the number of the row to be deleted. As illustrated in Figure 10C, the fourth row, (signified as ID 4), has been removed from the table. Instead of using the soft key functions, the user could instead highlight the row to be deleted either by mouse click or placing the cursor on the row and then hitting the delete key on their keyboard.

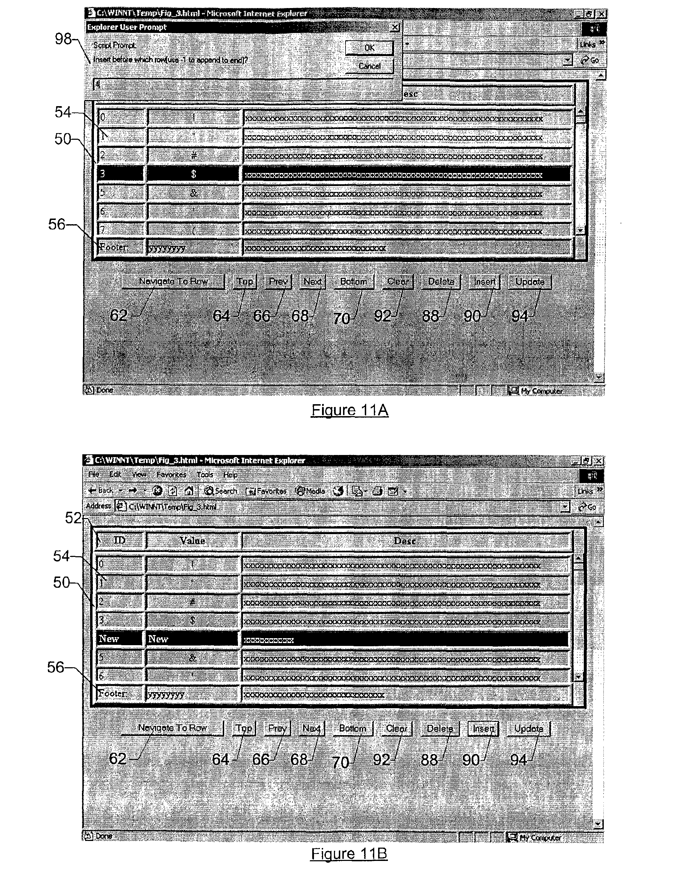

Figures 11A-11B illustrate the insertion of a new row. Specifically, when a user selects the insert **90** soft key, a prompt window **98** is displayed requesting that the user enter the row number where the new row is to be inserted. In this case, the user has entered row **4**, and as illustrated in Figure 11B, a new row is inserted at position four. Again, the user may use either mouse or keyboard commands to insert the new row.

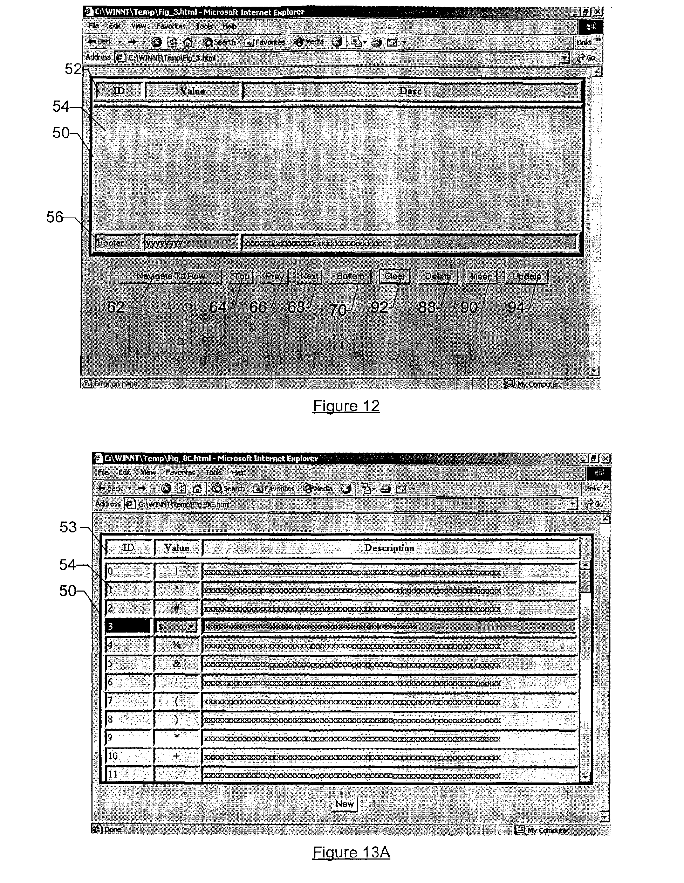

Figure 12A illustrates operation of the clear function for deleting all rows from the table. When the clear soft key is selected, all rows are deleted.

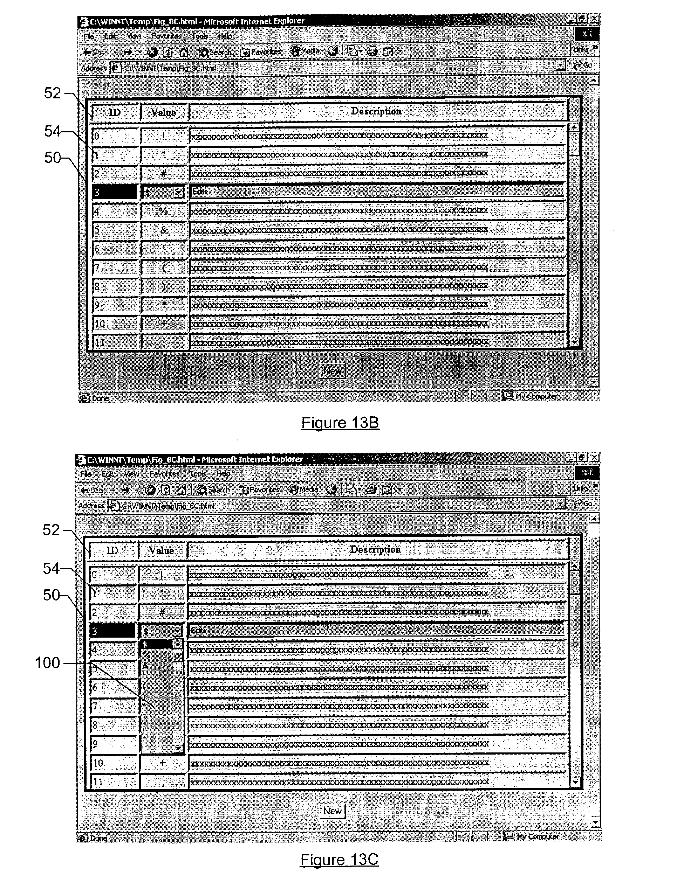

Figures 13A-C illustrate editing of the table. As illustrated in Figure 13A, the apparatus and method of this embodiment of the present invention allows edits to the value and description fields of the table. Using the mouse or up and down arrow keys, a user can select a row in the table. As illustrated in Figure 13B, the user may edit information in the description field of the row. Figure 13C illustrates an alternative option for editing of the table. Specifically, in this embodiment, the table includes a drop down menu **100** that allows the user to select from available text a proper value for the field.

The apparatus and method of the present invention also allow a user to mark table entries of interest by highlighting the row so that the row is easily noticeable in the table. In this instance, the user selects a desired row by selecting from a pop-up menu, clicking on the row with a mouse, or by navigating to the row with keyboard commands. The highlight function changes the background color for the row to indicate that it is highlighted.

### 9. Batch Updating of the Database

As discussed above, many conventional client-server systems require repeated connection to the network during data display and editing. Specifically, these systems typically update the database on the remote server as each edit is made by the user. They may further perform periodic updates of the data displayed to the user. This constant update of the database on the server can cause significant delay. Further, constant connection to the network can raise security issues.

In light of these problems with traditional client-server systems, the apparatus and methods of the present invention provide an edit log that records the various edits made to the table by the user. The apparatus and methods of the present invention operate in the presentation layer, such that as edits are made by the user, these edits are represented in the table displayed to the user. The edit log created by the apparatus and methods of the present invention is used to update the database.

The apparatus and methods of the present invention use code that emulates a track changes function. Specifically, the code generates an array that contains all of the data from the table, and indicates which data has been deleted, inserted, and updated. It includes flags to indicate which data has been altered and which data is original. After all edits are made by the user, the log file is exported to a comma delimited file. This file is then used to update the remote database. After the remote database has been updated, all flags are reset to original status and the log is cleared.

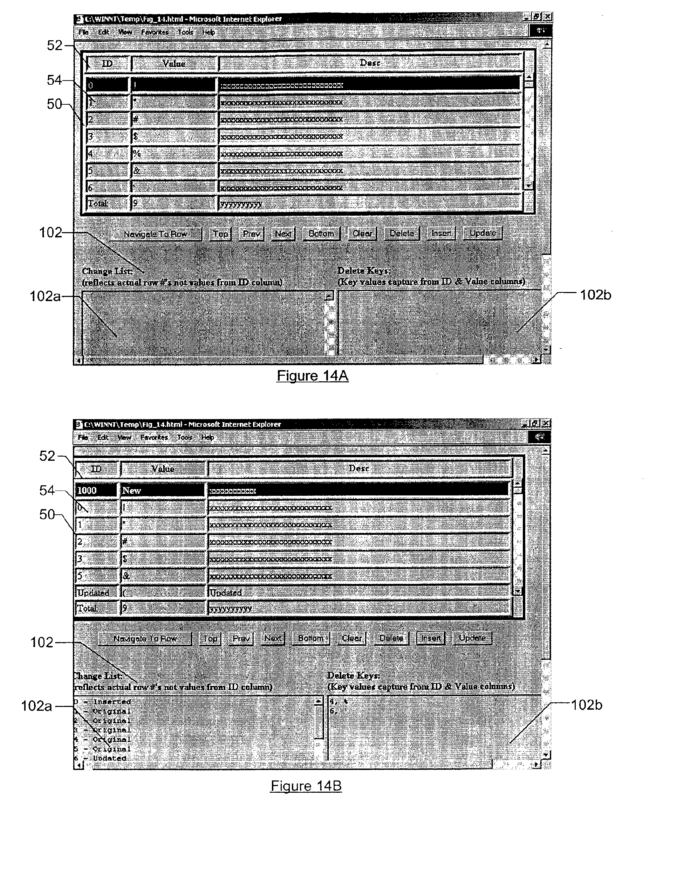

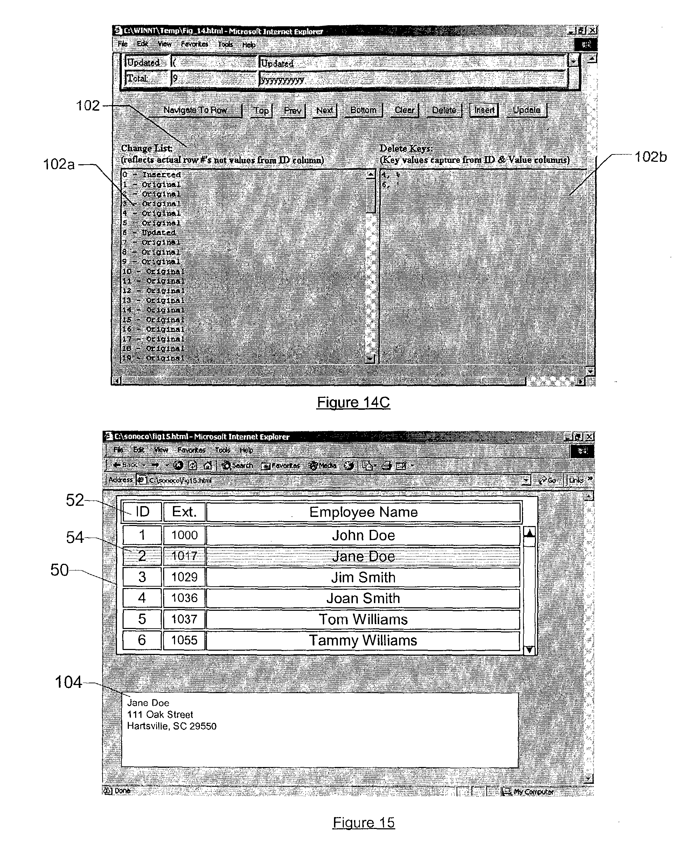

With reference to Figures 14A-14B, the operation of the track changes log file are shown. Specifically, Figure 14A illustrates a table having properties that allow a user to edit certain portions of the table. The user can delete rows, clear all rows, and add rows. Importantly, located below the table is a visual representation **102** of the log file created to track changes made to the table by the user for later update of the database located on a remote server. The left portion **102a** of the log file illustrates insertions made to the table and the right portion **102b** of the file illustrates deletions made to the file. As mentioned, the apparatus and method of the present invention use flags to indicate changes made to the table. The original flag is a default flag indicating that the data associated with the flag has not been altered since the table was accessed. In a similar manner, the insert flag indicates data that has been inserted in the table; the delete flag indicates that the data associated therewith has been deleted; and the update flag indicates that the data associated therewith is no longer the original data but instead, has been updated.

In the example shown in Figures 14A-14B, row four and six have been deleted from the table, a new row zero is added to the table, and row five has been updated. As can be seen in Figure 14B, the updates requested by the user are displayed to the user by visual changes made to the display. The fourth row has been deleted, the new zero row is displayed, and the fifth row is updated. Further, as illustrated in Figure 14C, these edits have been stored in the log **102** in a form that will allow for later update of the database with these changes. The original flag is used to designate all of the rows that have not been changed, the insertion flag is used in conjunction with the zero row to indicate its insertion into the table, and the delete flag is used with the fourth row to indicate its deletion from the table. As mentioned, at a later time, the log will be used to update the database. Following this update, the status of all of the data will again be set to original, and the log file will be cleared.

### 10. Function Disablement

The present invention provides various functions that can be used with the tables. As mentioned, in some embodiments, the user may display more than one table in the same web page. The designer may wish to provide some functions for one table but not for another. Further, some functions may be included as a default during table design, and the designer may wish to limit the functionality of a table. In these instances, the designer can use the disable command to disable functions for a table. The disable function may also be used to momentarily disable functions for a table. For example, when a remote database is being updated from the log file generated during editing of a table, it may be advantageous to bar the user from making further edits to the table. As such, the function for updating the remote database includes a call to the disable command, which freezes all functions with regard to the table until after the update of the remote database is completed.

### 11. Data Linking

In many instances, the data displayed in a particular table has added supporting or related data associated therewith that may be of use to a user. For example, a data field may contain a total dollar value for all deliveries in a month from a vendor. Underlying this total is supporting data, such as the exact delivery dates of each shipment, the dollar value of each shipment, etc. To make this data accessible to the user, the library file of the present invention may further include code that links the data from one displayed table to its supporting data. In this embodiment, the user can access the supporting and related data by clicking on a value in the currently displayed table. This action causes the apparatus and method of the present invention to display a second table to the user including the associated information. In many instances, the newly created table is displayed in a nested format on the screen overlying the first table. The apparatus and methods of the present invention allow the user to expand the view of the second table, minimize the second table, and toggle between the first and second tables, if so desired.

Figure 15 illustrates the display of a nested second table **104** containing further data related to a data item selected by the user from the first table. Specifically the first table illustrates a list of employees and phone extension numbers. By clicking on one of the employees, additional information linked to the employee can be displayed in the second nested table. For example, the second entry on the first table has been selected, and the information associated with that employee is illustrated in the second table.

Importantly, the apparatus and methods of the present invention allow for updates made in one table to be reflected in a linked table. For example, if a user is interested in a total cost value located in one table and alters a value in a linked table that affects total cost, the apparatus and methods of the present invention will automatically update the affected value in the link table to represent the affect of the user's change.

### II. Examples

As detailed above, the apparatus and method of the present invention provide a library file containing objected orient code that can be used to create customized tables for display of data to a user. The library file includes code that allows a user to customize the appearance of the table in terms of border, font color, type, and size, background and foreground coloring, etc. The library file further includes code that the designer may use to allow different forms of navigation within the table and different edit functions that the user may employ to edit the various fields of the table. One important feature of the present invention is the inclusion of code for creating tables that allows the header and footer of the table to be frozen, while the body of the table is scrolled. Further, the system allows use of a track change system to record edits to the data, such that the user does not require a continuous network connection to the database.

Listed above are various features that can be implemented by a design into a web page for display and editing of data. As discussed, the user can create a customized table by creating an HTML file that includes function call outs to the library file of the present invention. Provided below are a few examples of the types of tables and functionality that can be incorporated into a table. More importantly, included below are the pertinent portions of the HTML file that is used to generate the table. These examples are not exhaustive, but instead are provided to give one skilled in the art a more full understanding of the use of the library file of the present invention.

A first example is illustrated Figure 3A. This table illustrates the scroll features of a table created based on the present invention. This table was created by generation of an HTML file containing call out functions from the library file of the present invention. Listed below are the relevant portions of the HTML file used to generate the table of Figure 3A. This code illustrates the ease in designing the table using the library file of the present invention.

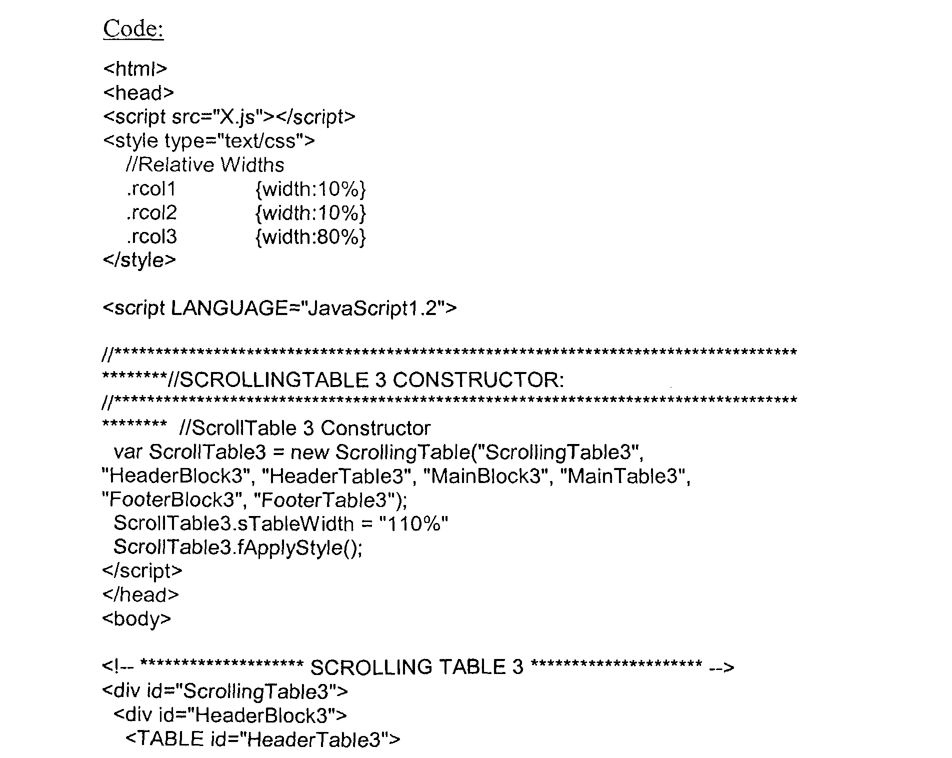

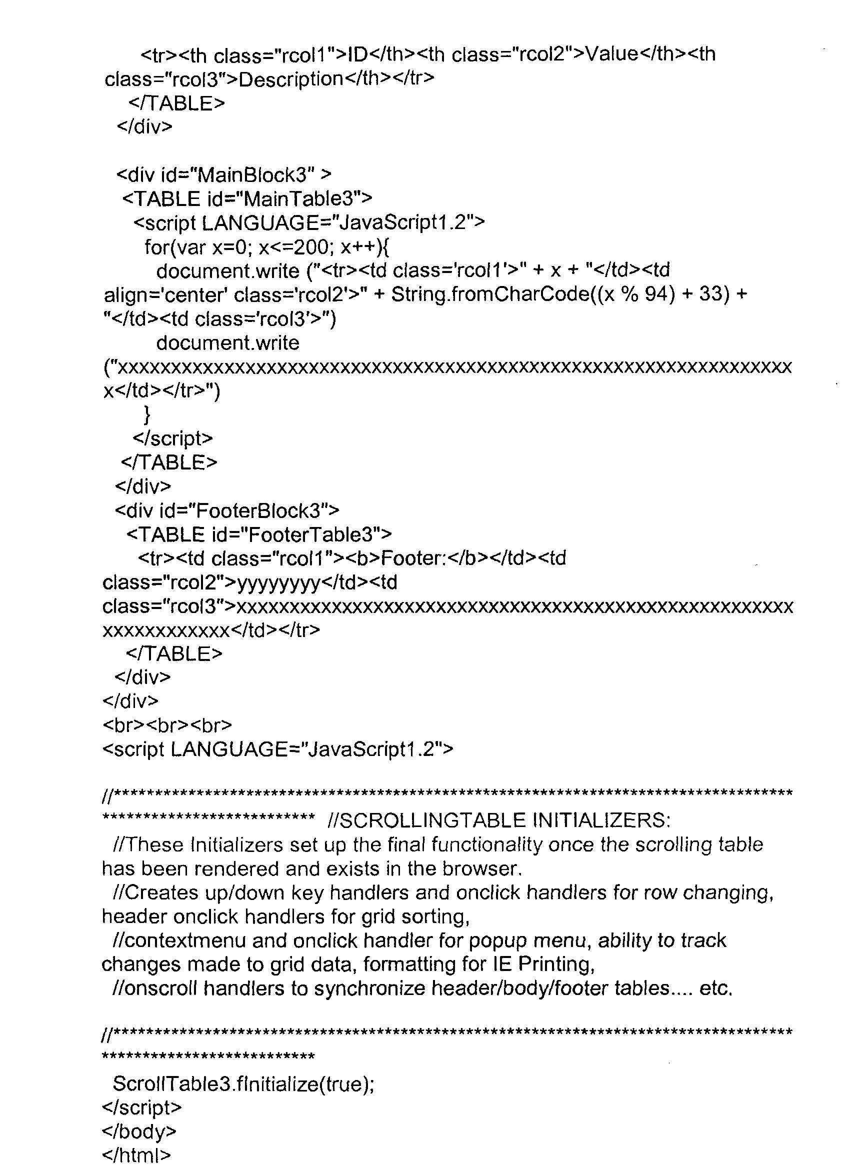

With regard to the code, at line 3, the HTML file calls the library file of the present invention, which is named X.js. The table constructor defines the table as having a heading, body, and footer section. Importantly, lines 24-45 of the code define the table and populate it with data. As illustrated, the <div> tag is used to separate the header, body, and footer of the table, such that each of these sections of the table can be independently formatted. For example, the header and footer are formatted such that they remain frozen, while the body of the table is scrolled.

Figure 12A illustrates yet another example of tables that can be created using the object-oriented code of the library file of the present invention. Specifically, this table illustrates editing of the data located in the table either by entering the data or selecting data from a pop up window containing various possible values. The code for the HTML file is provided below.

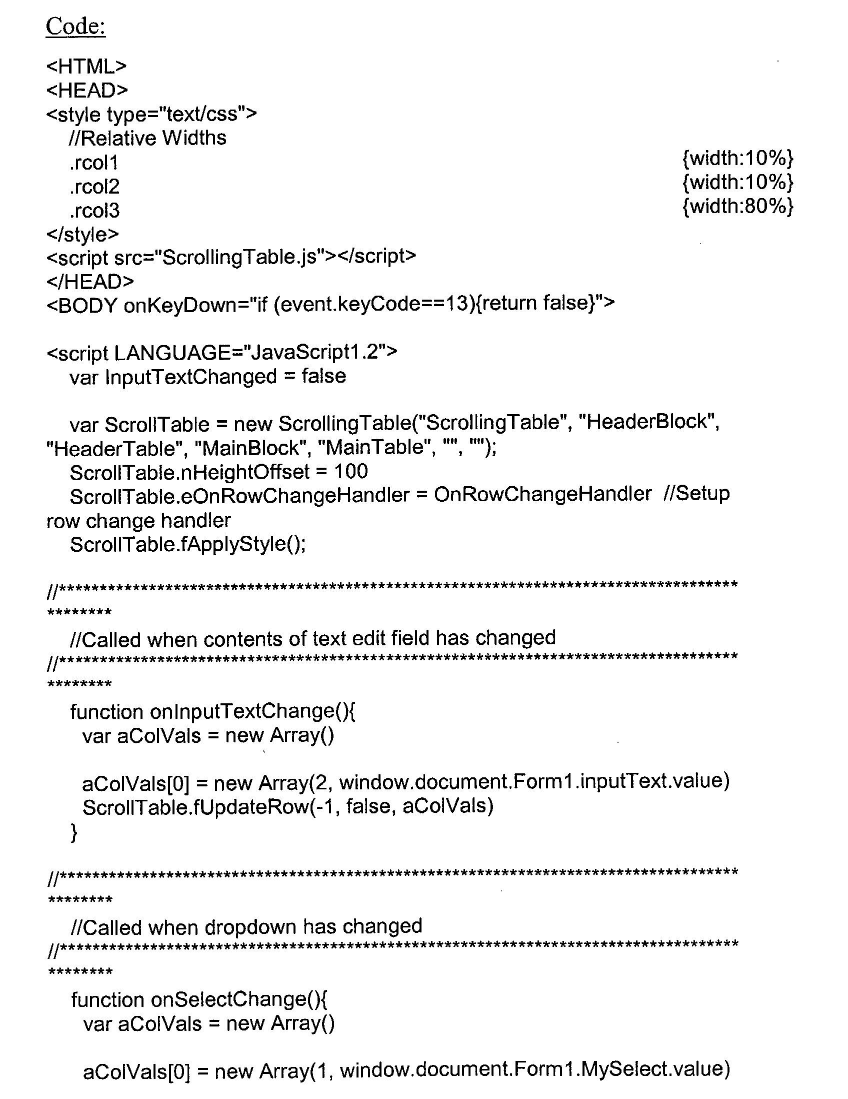

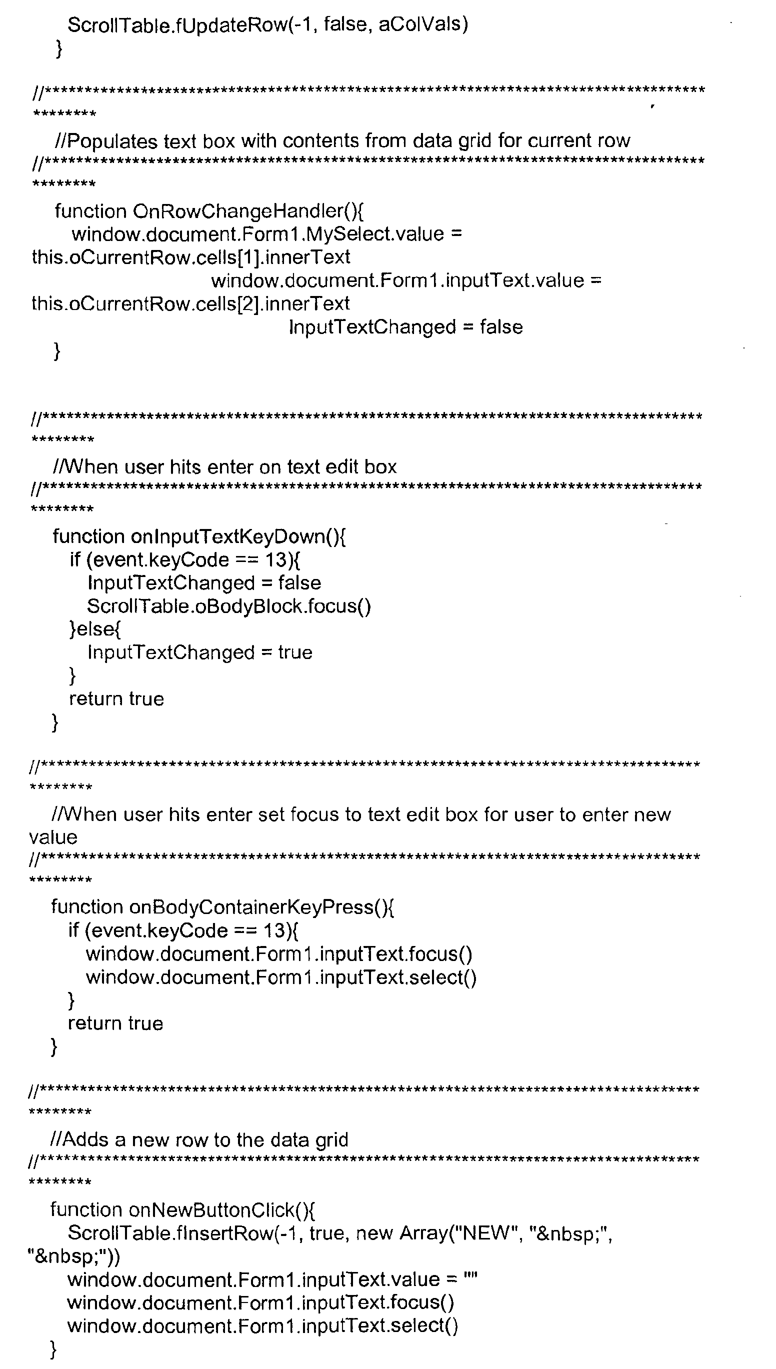

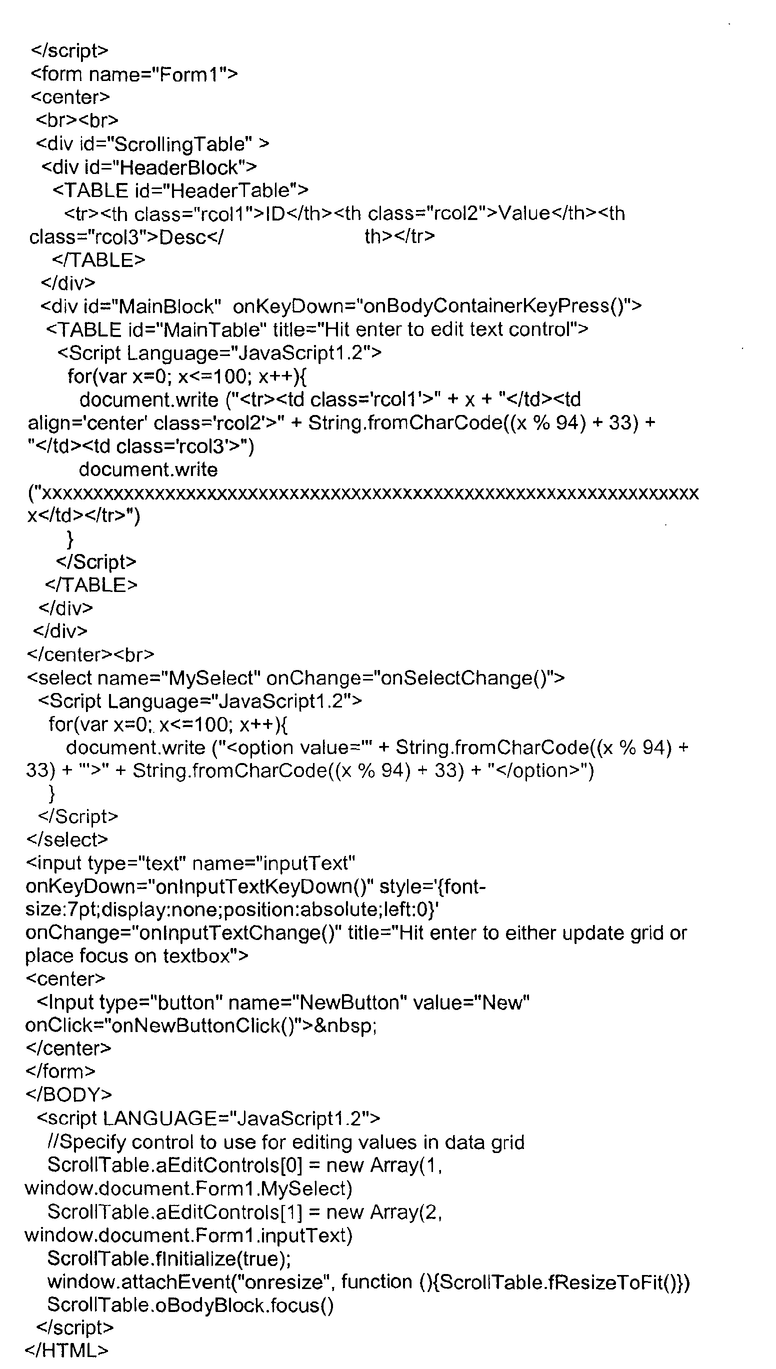

The various headings in the code designate the sections of the code related to generation and display of the pop menu and receiving edits from the user. The HTML file also includes code for update of the fields.

As disclosed above, the present invention provides apparatus and methods for displaying data in tabular form to user via a web page. The apparatus and methods of the present invention provide a library file containing various object-oriented code that implement many of the features available for display and editing of data by conventional client-side software. In operation, a user creates an HTML file containing function calls to the library file for object-oriented code used to display and allow edits to a table displayed to a user.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An apparatus comprising a web page file stored in a computer readable medium containing at least two separate sections having at least different formatting, wherein said web page file comprises Hypertext Markup Language divide <div> commands to separate the sections in the web page.

2. An apparatus according to Claim 1, wherein said web page includes instructions for displaying a table in a web page having at least two separate sections, wherein said web page file comprises Hypertext Markup Language divide <div> commands to separates the two sections of the table in the web page, such that the sections have at least one of a different display formatting and a different function.

3. An apparatus according to Claim 2, wherein one of said Hypertext Markup Language divide <div> commands separates the two sections of the table in the web page, such that one of said sections is scrollable while the other of said sections remains fixed.

4. An apparatus according to Claim 1, wherein said web page file comprises instructions for displaying at least two separate tables in a web page,
wherein said web page file comprises Hypertext Markup Language divide <div> commands to separate the tables in the web page, such that the tables have at least one of a different display formatting and a different function.

5. An apparatus according to Claim 4, wherein at least one of the tables comprises at least a header and a body, and wherein said web page file comprises Hypertext Markup Language divide <div> commands to separate the header and body of the table in the web page, such that the header and body have at least one of a different display formatting and a different function.

6. An apparatus according to Claim 4 further comprising a library file stored on a computer readable medium comprising a plurality of object-oriented code functions, wherein at least one of said code functions defines formatting for displaying of a table and at least one of said code functions defines a functionality of a displayed table.

7. An apparatus according to Claim 6, wherein said library file comprises object-oriented code formatting functions for defining the border and fonts used to display a table in a web page.

8. An apparatus according to Claim 7, wherein said web page file comprises a callout to said library file for said object-oriented code formatting functions that defines the border and fonts used to display a table, and wherein said web page file further comprises code that alters default settings for the border and fonts defined in said object-oriented code format functions.

9. An apparatus according to Claim 6, wherein said library file further comprises object-oriented code navigation functions that allow a user to navigate to different portions of a table, and wherein said web page file comprises callouts to selected ones of said object-oriented code navigation functions to thereby provide a user with selected functions for navigating in a table.

10. An apparatus according to Claim 6, wherein said library file further comprises object-oriented code edit functions that allow a user to edit a table, and
wherein said web page file comprises callouts to selected ones of said object-oriented code edit functions to thereby provide a user with selected functions for editing a table.

11. An apparatus according to Claim 6, wherein data for populating the table is located at a remote server, wherein said library file further comprises:
object-oriented code functions for receiving edits to the table from a user;
object-oriented code functions for altering a display of the table based on user input;
object-oriented code functions for creating a track change log containing edits made to the displayed table by a user; and
object-oriented code functions for updating the data located in the remote server based on the edits outlined in the track change log.

12. An apparatus according to Claim 1, further comprising:
a library file stored on a computer readable medium comprising a plurality of object-oriented code functions that can be used for generating a display of a table, wherein said web page file includes function calls that correspond to object-oriented code functions located in the library file used for generating a display of the table; and
a remote workstation connected to the server via the network, wherein said workstation displays the selected table based on the function calls located in said web page file.

13. A method for displaying information in a web page comprising:
providing a web page file stored in a computer readable medium containing at least two separate sections having at least different formatting;
inserting Hypertext Markup Language divide <div> commands to separate the sections in the web page.

14. A method according to Claim 13, wherein said providing step provides a web page that includes instructions for displaying a table in a web page having at least two separate sections, wherein said inserting step comprises inserting Hypertext Markup Language divide <div> commands to separates the two sections of the table in the web page, such that the sections have at least one of a different display formatting and a different function.

15. A method according to Claim 14, wherein one of said Hypertext Markup Language divide <div> commands separates the two sections of the table in the web page, such that one of said sections is scrollable while the other of said sections remains fixed.

16. A method according to Claim 13, wherein said providing comprises providing a web page file stored in a computer readable medium containing instructions for displaying at least two separate tables in a web page, and said inserting comprises inserting Hypertext Markup Language divide <div> commands in the web page to separate the tables in the web page, such that the tables have at least one of a different display formatting and a different function.

17. A method according to Claim 16, wherein at least one of the tables comprises at least a header and a body, and wherein said inserting further comprises inserting Hypertext Markup Language divide <div> commands in the web page to separate the header and body of the table in the web page, such that the header and body have at least one of a different display formatting and a different function.

18. A method according to Claim 16 further comprising providing a library file stored on a computer readable medium comprising a plurality of object-oriented code functions, wherein at least one of the code functions defines formatting for displaying of a table and at least one of said code functions defines a functionality of a displayed table.

19. A method according to Claim 18, wherein said providing a library file provides a library comprising object-oriented code formatting functions for defining the border and fonts used to display a table in a web page.

20. A method according to Claim 19, wherein said inserting inserts a callout in the web page file to said library file for object-oriented code formatting functions that define the border and fonts used to display a table, and wherein said inserting further inserts code in the web page file that alters default settings for the border and fonts defined in the object-oriented code format functions.

21. A method according to Claim 18, wherein said providing a library file provides a library file further comprising object-oriented code navigation functions that allow a user to navigate to different portions of a table, and wherein said inserting inserts callouts in the web page file to selected ones of the object-oriented code navigation functions to thereby provide a user with selected functions for navigating in a table.

22. A method according to Claim 18, wherein said providing a library file provides a library file further comprising object-oriented code edit functions that allow a user to edit a table, and wherein said inserting inserts callouts in the web page file to selected ones of said object-oriented code edit functions to thereby provide a user with selected functions for editing a table.

23. A method according to Claim 18, wherein data for populating the table is located at a remote server, wherein said providing a library file provides a library file further comprising:
object-oriented code functions for receiving edits to the table from a user;
object-oriented code functions for altering a display of the table based on user input;
object-oriented code functions for creating a track change log containing edits made to the displayed table by a user; and
object-oriented code functions for updating the data located in the remote server based on the edits outlined in the track change log.

24. A method according to Claim 13, wherein said providing provides a library file stored on a computer readable medium comprising a plurality of object-oriented code functions that can be used for generating a display of a table,
wherein said web page file includes function calls that correspond to object-oriented code functions located in the library file used for generating a display of the table, wherein said providing step further provides a remote workstation connected to the server via the network, wherein said workstation displays the selected table based on the function calls located in said web page file.
